# EUROPEAN PATENT SPECIFICATION

(11) **EP 3 987 837 B1**
(45) Date of publication and mention of the grant of the patent: **12.11.2025**
(21) Application number: 20830628.2
(22) Date of filing: 07.04.2020
(51) Int. Cl.: H04W 12/06, H04W 84/12, B60R 16/023, H04W 4/80, H04W 4/40, H04W 84/00, H04W 84/18

(54) **SECURE WIRELESS NETWORKS FOR VEHICLES**
SICHERE DRAHTLOSNETZWERKE FÜR FAHRZEUGE
RÉSEAUX SANS FIL SÉCURISÉS POUR VÉHICULES

(30) Priority: 24.06.2019 US 201916450959
(43) Date of publication of application: 27.04.2022
(73) Proprietor: Platform Science, Inc., San Diego, CA 92121 (US)
(72) Inventor: KENNEDY, John C., La Jolla, CA 92037 (US); KOPCHINSKY, Scott, La Jolla, CA 92037 (US); SON, Don, La Jolla, CA 92037 (US); FIELDS, Jacob, La Jolla, CA 92037 (US)
(74) Representative: Tomkins & Co
(86) International application number: PCT/US2020/027032
(87) International publication number: WO 2020/263380

(56) References cited:
- US-A1- 2013 017 816
- US-A1- 2014 213 176
- US-A1- 2017 178 035
- US-A1- 2017 367 142
- US-A1- 2018 376 522
- US-B2- 9 032 493

## Description

### Technical Field

The present invention relates to a system for vehicle to mobile device secure wireless communications, and to a method for finding a specific vehicle in a vehicle depot.

### Background Art

The prior art discusses various techniques for wireless networks for vehicles.

U.S. Patent Number 9215590 for Authentication Using Vehicle Data Pairing discloses the wireless pairing of a portable device with an on-board computer of a vehicle for authenticating a transaction with a third party. United States Patent Application Publication No. US 2017/0367142 relates to secure wireless networks for vehicles.

General definitions for terms utilized in the pertinent art are set forth below.

Beacon is a management frame that contains all of the information about a network. In a WLAN, Beacon frames are periodically transmitted to announce the presence of the network.

BLUETOOTH technology is a standard short range radio link that operates in the unlicensed 2.4 gigaHertz band.

FTP or File Transfer Protocol is a protocol for moving files over the Internet from one computer to another.

Media Access Control (MAC) Address is a unique identifier assigned to a device by a manufacturer of the device.

SSID (Service Set Identifier) is a 1 to 32 byte string that uniquely names a wireless local area network.

Transfer Control Protocol/Internet Protocol ("TCP/IP") is a protocol for moving files over the Internet.

User Interface or UI is the junction between a user and a computer program. An interface is a set of commands or menus through which a user communicates with a program. A command driven interface is one in which the user enter commands. A menu-driven interface is one in which the user selects command choices from various menus displayed on the screen.

There is a need for securely connecting multiple devices to a single access point in a vehicle, while preventing malicious users from detecting and connecting to a wireless network published on a vehicle.

### Summary Of The Invention

The invention is defined by the subject-matter of the independent claims. Preferred embodiments are defined in the dependent claims. The present invention provides a system and method of securely and accurately connecting mobile devices to wireless networks in vehicles by using encrypted wireless network configurations based on vehicle specific data.

One aspect of the present invention is a system for vehicle to mobile device secure wireless communications. The system comprises a vehicle comprising an on-board computer with a memory having a vehicle identification number (VIN), a connector plug, and an motorized engine, a connected vehicle device (CVD) comprising a processor, a WiFi radio, a BLUETOOTH radio, a memory, and a connector for mating with the connector plug of the vehicle, and a mobile device comprising a graphical user interface, a processor, a WiFi radio, a BLUETOOTH radio, and a cellular network interface. The CVD is configured to broadcast BLUETOOTH or BLUETOOTH low energy connection in a hidden mode. The mobile device is configured to search for a vehicle having a CVD broadcasting the BLUETOOTH or BLUETOOTH low energy connection in the hidden mode. The mobile device is configured to pair with the CVD.

Another aspect of the present invention is a method for a secure connection to a wireless network of a vehicle. The method includes broadcasting a BLUETOOTH or BLUETOOTH low energy connection having a BLUETOOTH advertisement from a CVD connected to an on-board computer of a vehicle. The method also includes searching at a mobile device for a vehicle having a CVD broadcasting the BLUETOOTH or BLUETOOTH low energy connection having the BLUETOOTH advertisement. The method also includes pairing the mobile device with the CVD.

Yet another aspect of the present invention is a system for vehicle to mobile device secure wireless communications utilizing BLUETOOTH. The system comprises a vehicle comprising an on-board computer with a memory having a vehicle identification number (VIN), a connector plug, and an motorized engine, a connected vehicle device (CVD) comprising a processor, a WiFi radio, a BLUETOOTH radio, a memory, and a connector for mating with the connector plug of the vehicle, and a mobile device comprising a graphical user interface, a processor, a WiFi radio, a BLUETOOTH radio, and a cellular network interface. The CVD is configured in a hidden mode of BLUETOOTH or BLUETOOTH low energy to receive a signal including a MAC address of the CVD. The mobile device is configured to search for a vehicle having the CVD by transmitting a BLUETOOTH or BLUETOOTH low energy connection with the MAC address of the CVD. The mobile device is configured to link with the CVD.

Yet another aspect of the present invention is a system for vehicle to mobile device secure wireless communications utilizing BLUETOOTH. The system comprises a vehicle comprising an on-board computer with a memory having a vehicle identification number (VIN), a connector plug, and an motorized engine, a connected vehicle device (CVD) comprising a processor, a WiFi radio, a BLUETOOTH radio, a memory, and a connector for mating with the connector plug of the vehicle, and a mobile device comprising a graphical user interface, a processor, a WiFi radio, a BLUETOOTH radio, and a cellular network interface. The CVD is configured to broadcast BLUETOOTH or BLUETOOTH low energy connection in a hidden mode. The mobile device is configured to search for a vehicle having a CVD broadcasting the BLUETOOTH or BLUETOOTH low energy connection in the hidden mode. The mobile device is configured to pair with the CVD using a certificate with a second field, in which the mobile device has a pairing code (e.g., MAC address for the CVD) for the second field.

### Brief Description Of The Drawings

FIG. 1 is a block diagram of system for securely connecting a wireless device to a single access point in a vehicle.
FIG. 2 is a block diagram of system for securely connecting a wireless device to a single access point in a vehicle.
FIG. 3 is an illustration of a driver identifying a vehicle through connection of a tablet computer to an unpublished network.
FIG. 4 is an isolated view of general electrical components of a mobile communication device.
FIG. 5 is an isolated view of general electrical components of a server.
FIG. 6 is a flow chart of method for securely connecting a wireless device to a single access point in a vehicle.
FIG. 7 is an illustration of a system for securely connecting a wireless device to a single access point in a vehicle.
FIG. 8 is an illustration of a driver identifying a vehicle through connection of a tablet computer to an unpublished network.

### Best Mode(s) For Carrying Out The Invention

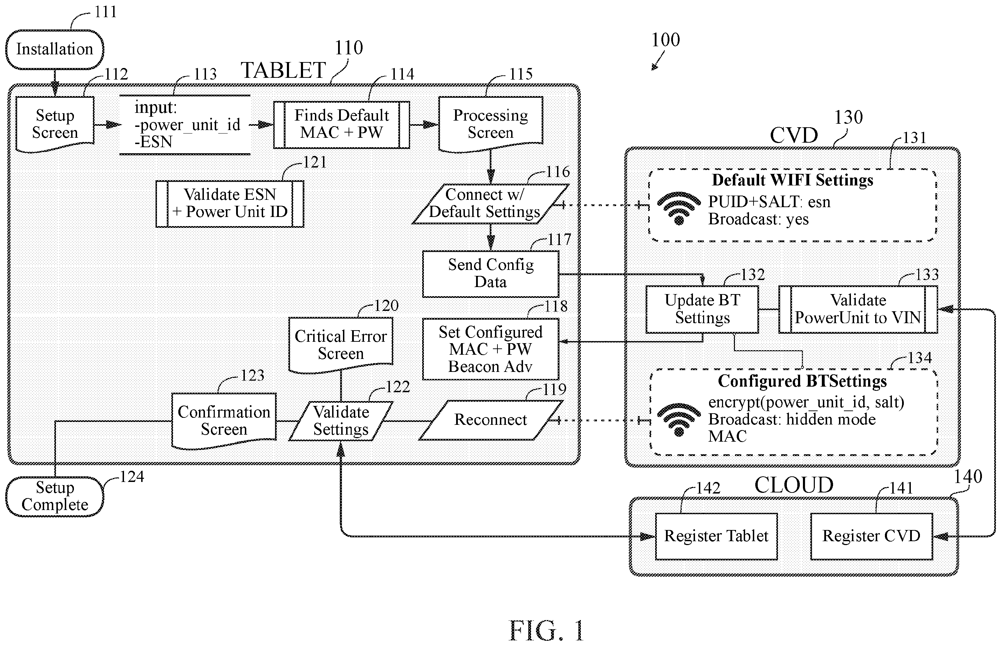

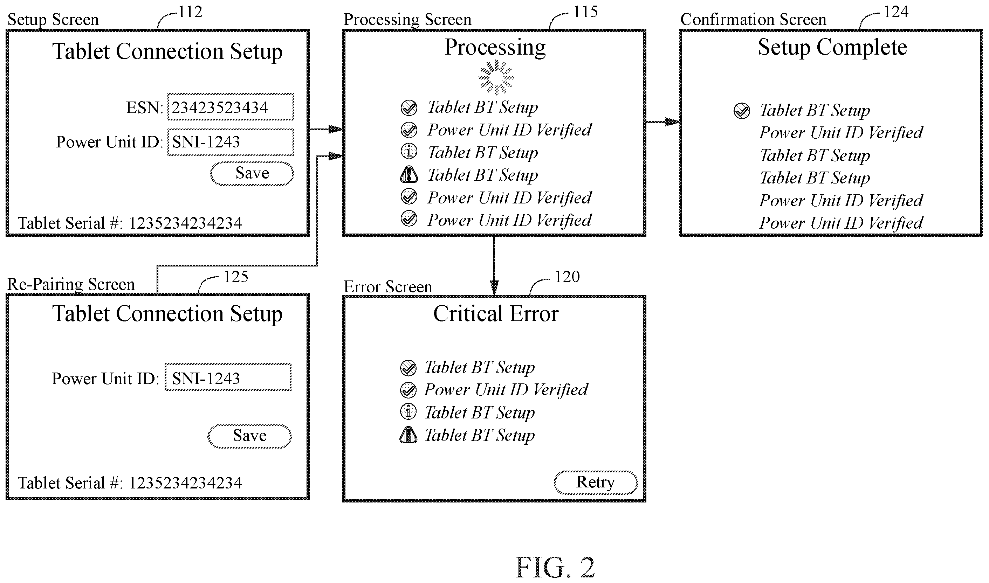

FIGS. 1 and 2 illustrate a pairing process for a system 100 for securely connecting a wireless device to a single access point in a vehicle. The secure connection is preferably established between a tablet computer 110 and connected vehicle device ("CVD") 130. The CVD 130 is preferably physically connected to an on-board computer of a vehicle. The vehicle is preferably a delivery truck or a long-haul semi-truck. The CVD 130 uses a BLUETOOTH signal that is broadcast in a hidden mode, and thus the wireless network is unpublished. The tablet computer 110, having previously paired with the CVD 130, is used to "find" or re-pair with the wireless network of the CVD 130 since the BLUETOOTH settings are retained in a memory of the tablet computer 130. At block 111, the installation begins for the tablet computer 110. At block 112, a setup screen having an ESN, a power unit identification and a tablet computer serial number is displayed. At block 113, the identifications are inputted, and at block 121 they are validated. At block 114, it finds the hidden mode BLUETOOTH signal plus the password. The BLUETOOTH signal preferably comprises a MAC address for the CVD. At block 115, the processing occurs including the processing of the tablet computer setup and the verification of the power unit identification. At block 116, it connects with the default settings to the CVD 130 pairing with the default settings 131 of the CVD 130. At block 117, the tablet computer sends configuration data to the CVD 130. At block 132, the CVD 130 updates the BLUETOOTH settings and at block 133 validates the power unit to the VIN. At block 141, the CVD 130 is registered with a cloud computing service 140, and at block 142, the tablet computer is registered with the cloud computing service 140. At block 118, the tablet computer 110 sets the configured MAC address and password from the CVD 130. At block 119, the tablet computer 110 reconnects with the configured hidden mode BLUETOOTH settings. At block 134 on the CVD 130, the configured hidden mode BLUETOOTH settings include the MAC address: encrypt (power unit identification salt) and the BLUETOOTH signal is broadcast in the hidden mode. At block 122, the settings are validated on the tablet computer 110, or the tablet computer 110 and the CVD 130 utilize a traditional BLUETOOTH certificate pairing (Host and Client). Alternatively at block 122, the settings are validated on the tablet computer 110, and the tablet computer 110 and the CVD 130 utilize a traditional BLUETOOTH certificate pairing (Host and Client) as a secondary authentication. In an alternative to utilizing the traditional BLUETOOTH certificate pairing, the certificate has a second field which must be submitted for pairing and re-pairing. The second field may include the MAC address of the CVD 130. During a traditional BLUETOOTH pairing, the CVD 130 and the tablet computer 110 establish a relationship by creating a link key. The CVD 130 and the tablet computer 110 store the same link key to be paired. The tablet computer 110 can cryptographically authenticate the identity of the CVD 130, ensuring it is the same CVD it previously paired with. Once a link key is generated, an authenticated asynchronous connection-less link between the CVD 130 and the tablet computer 110 is encrypted to protect transmitted data. Block 120 is a critical error screen in which the tablet connection setup failed or the power unit identification was not verified. At block 123, a confirmation screen is shown on the tablet computer 110. At block 124, the setup is complete. At block 125, a tablet hidden mode BLUETOOTH setup re-pairing screen is shown.

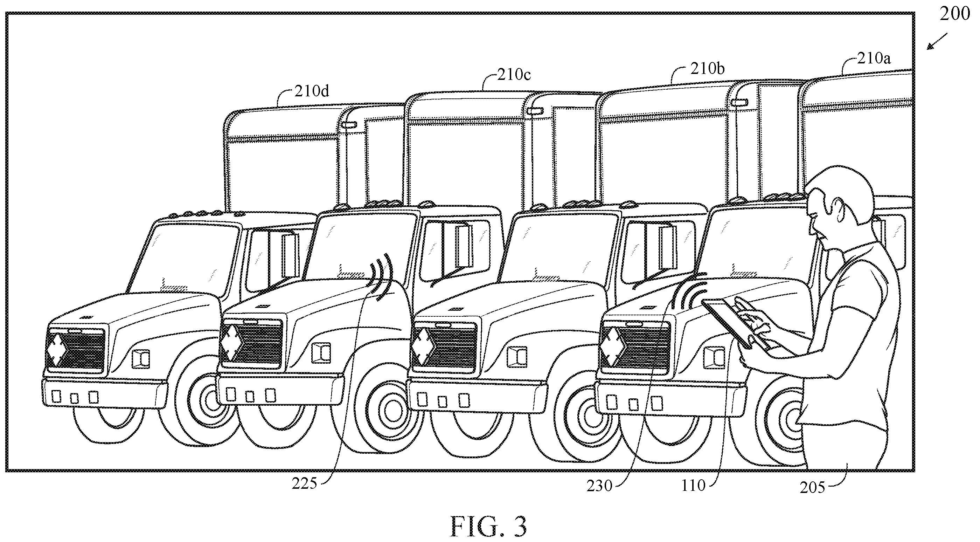

As shown in FIG. 3, each of a multitude of trucks 210a-210d broadcast a wireless signal for a truck specific network, with one truck 210c broadcasting a hidden mode BLUETOOTH wireless signal 225. Since the hidden mode BLUETOOTH is not published, only a driver is already in possession of the hidden mode BLUETOOTH signal can pair the tablet computer 110 with the CVD 130 of the truck 210 to which the driver is assigned. So even though the hidden mode BLUETOOTH wireless signals are being "broadcast", they will not appear on a driver's tablet computer 110 (or other mobile device) unless the tablet computer 110 has already been paired with the CVD 130 of the vehicle 210. A driver 205 in possession of a tablet computer 110 pairs, using a signal 230, the tablet computer 110 with the wireless network 225 of the CVD of the truck 210c, and thus the driver locates the specific truck 210c he is assigned to in a parking lot full of identical looking trucks 210a-d.

For example, on an IPHONE^{®} device from Apple, Inc., the "UDID," or Unique Device Identifier is a combination of forty numbers and letters, and is set by Apple and stays with the device forever.

For example, on an ANDROID based system, one that uses Google Inc.'s ANDROID operating system, the ID is set by Google and created when an end-user first boots up the device. The ID remains the same unless the user does a "factory reset" of the phone, which deletes the phone's data and settings.

The mobile communication device 110, or mobile device, is preferably selected from mobile phones, smartphones, tablet computers, PDAs and the like. Examples of smartphones and the device vendors include the IPHONE^{®} smartphone from Apple, Inc., the DROID^{®} smartphone from Motorola Mobility Inc., GALAXY S^{®} smartphones from Samsung Electronics Co., Ltd., and many more. Examples of tablet computing devices include the IPAD^{®} tablet computer from Apple Inc., and the XOOM^{™} tablet computer from Motorola Mobility Inc.

The mobile communication device 110 then a communication network utilized preferably originates from a mobile communication service provider (aka phone carrier) of the customer such as VERIZON, AT&T, SPRINT, T-MOBILE, and the like mobile communication service providers, provide the communication network for communication to the mobile communication device of the end user.

Wireless standards utilized include 802.11a, 802.11b, 802.11g, AX.25, 3G, CDPD, CDMA, GSM, GPRS, radio, microwave, laser, Bluetooth, 802.15, 802.16, and IrDA.

BLUETOOTH^{™} technology operates in the unlicensed 2.4 GHz band of the radio-frequency spectrum, and in a preferred embodiment the secondary device 30 and/or primary device 25 is capable of receiving and transmitting signals using BLUETOOTH^{™} technology. LTE Frequency Bands include 698-798MHz (Band 12, 13, 14, 17); 791-960MHz (Band 5, 6, 8, 18,19,20); 1710-2170MHz (Band 1, 2, 3, 4, 9, 10, 23, 25, 33, 34, 35, 36, 37, 39); 1427-1660.5MH (Band 11, 21, 24); 2300-2700MHz (Band 7, 38, 40, 41); 3400-3800MHz (Band 22, 42, 43), and in a preferred embodiment the secondary device 30 and/or the primary device 25 is capable of receiving and transmitting signals using one or more of the LTE frequency bands. WiFi preferably operates using 802.11a, 802.11b, 802.11g, 802.11n communication formats as set for the by the IEEE, and in in a preferred embodiment the secondary device 30 and/or the primary device 25 is capable of receiving and transmitting signals using one or more of the 802.11 communication formats. Near-field communications (NFC) may also be utilized.

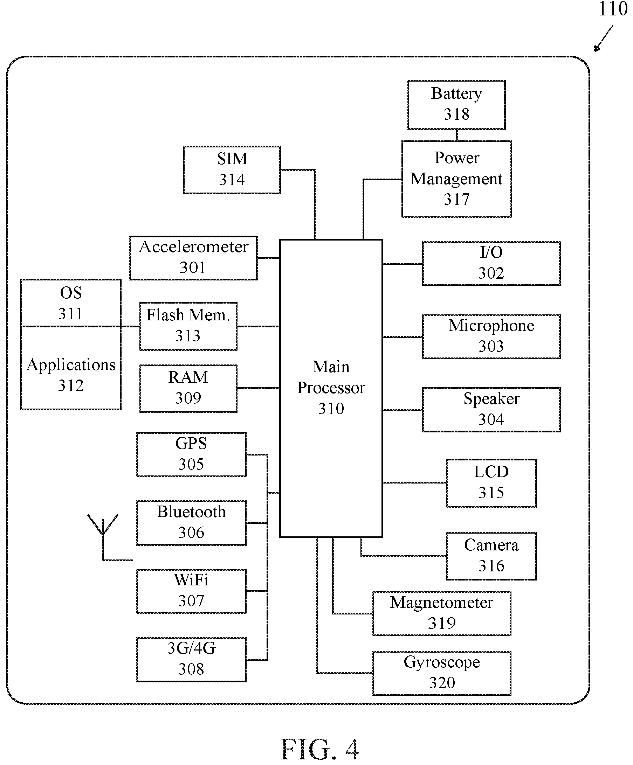

As shown in FIG. 4, a typical mobile communication device 110 preferably includes an accelerometer 301, I/O (input/output) 302, a microphone 303, a speaker 304, a GPS chipset 305, a Bluetooth component 306, a Wi-Fi component 307, a 3G/4G component 308, RAM memory 309, a main processor 310, an OS (operating system) 311, applications/software 312, a Flash memory 313, SIM card 314, LCD display 315, a camera 316, a power management circuit 317, a battery 318 or power source, a magnetometer 319, and a gyroscope 320.

Each of the interface descriptions preferably discloses use of at least one communication protocol to establish handshaking or bi-directional communications. These protocols preferably include but are not limited to XML, HTTP, TCP/IP, Serial, UDP, FTP, Web Services, WAP, SMTP, SMPP, DTS, Stored Procedures, Import/Export, Global Positioning Triangulation, IM, SMS, MMS, GPRS and Flash. Databases that may be used with the system preferably include but are not limited to MSSQL, Access, MySQL, Progress, Oracle, DB2, Open Source DBs and others. Operating system used with the system preferably include Microsoft 2010, XP, Vista, 200o Server, 2003 Server, 2008 Server, Windows Mobile, Linux, Android, Unix, I series, AS 400 and Apple OS.

The underlying protocol at the cloud server 140, is preferably Internet Protocol Suite (Transfer Control Protocol/Internet Protocol ("TCP/IP")), and the transmission protocol to receive a file is preferably a file transfer protocol ("FTP"), Hypertext Transfer Protocol ("HTTP"), Secure Hypertext Transfer Protocol ("HTTPS") or other similar protocols. The transmission protocol ranges from SIP to MGCP to FTP and beyond. The protocol at the authentication server 40 is most preferably HTTPS.

Wireless standards include 802.11a, 802.11b, 802.11g, AX.25, 3G, CDPD, CDMA, GSM, GPRS, radio, microwave, laser, Bluetooth, 802.15, 802.16, and IrDA.

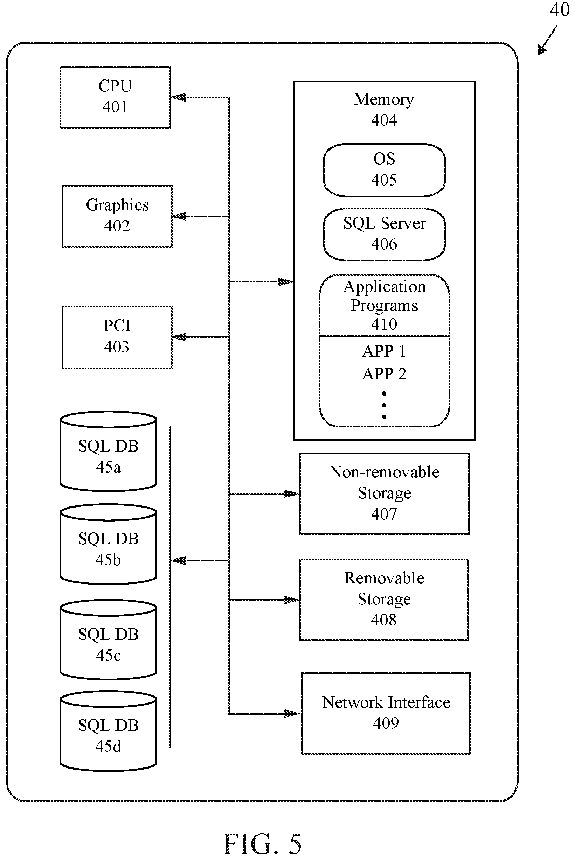

Components of a cloud computing server 140 of the system 100, as shown in FIG. 5, preferably includes a CPU component 401, a graphics component 402, PCI/PCI Express 403, memory 404, non-removable storage 407, removable storage 408, Network Interface 409, including one or more connections to a fixed network, and SQL database(s) 45a-45d, which includes the venue's CRM. Included in the memory 404, is an operating system 405, a SQL server 406 or other database engine, and computer programs/software 410. The venue server 40 also includes at least one computer program configured to receive data uploads and store the data uploads in the SQL database. Alternatively, the SQL server can be installed in a separate server from the venue server 40.

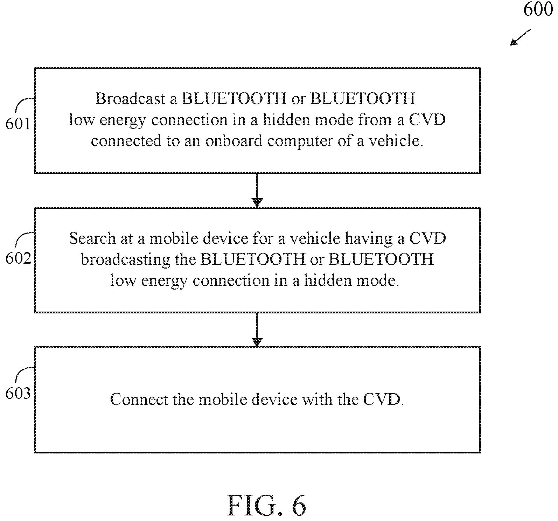

A flow chart for a method 600 for a secure connection to a wireless network of a vehicle is shown in FIG. 6. At block 601, the CVD broadcasts a BLUETOOTH signal, with an encrypted, MAC address for the CVD. At block 602, leveraging the known vehicle data and the encryption algorithm a mobile device searches for a vehicle having a CVD broadcasting the BLUETOOTH wireless network. At block 603, the mobile device is paired with the CVD.

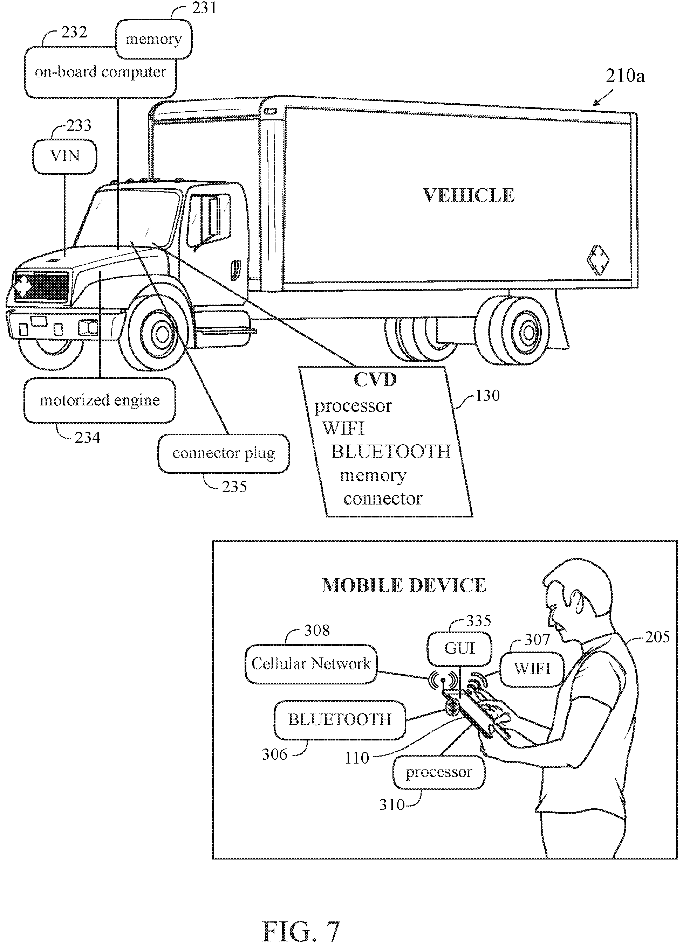

A system for a secure connection to a wireless network of a truck 210a is shown in FIG. 7. Those skilled in the pertinent art will recognize that the truck 210a may be replaced by any type of vehicle (such as a bus, sedan, pick-up, sport utility vehicle, limousine, sports car, delivery truck, van, mini-van, motorcycle, and the like) without departing from the scope of the present invention. The truck 210a preferably comprises a motorized engine 234, a vehicle identification number ("VIN"), an on-board computer 232 with a memory 231 and a connector plug 235. The on-board computer 232 preferably has a digital copy of the VIN in the memory 231. The on-board computer 232 is preferably in communication with the motorized engine 234. The truck 210a may also have a GPS component for location and navigation purposes, a satellite radio such as SIRIUS satellite radio, a driver graphical interface display, a battery, a source of fuel and other components found in a conventional long distance truck.

Also in the truck 210a is a CVD 130 comprising a processor, a WiFi radio, a BLUETOOTH radio, a memory and a connector to connect to the connector plug of the on-board computer 232.

A driver 205 preferably has a mobile communication device such as a tablet computer 110 in order to pair with a wireless network generated by the CVD 130 of the truck 210a. The tablet computer 110 preferably comprises a graphical user interface 335, a processor 310, a WiFi radio 307, a BLUETOOTH radio 306, and a cellular network interface 308.

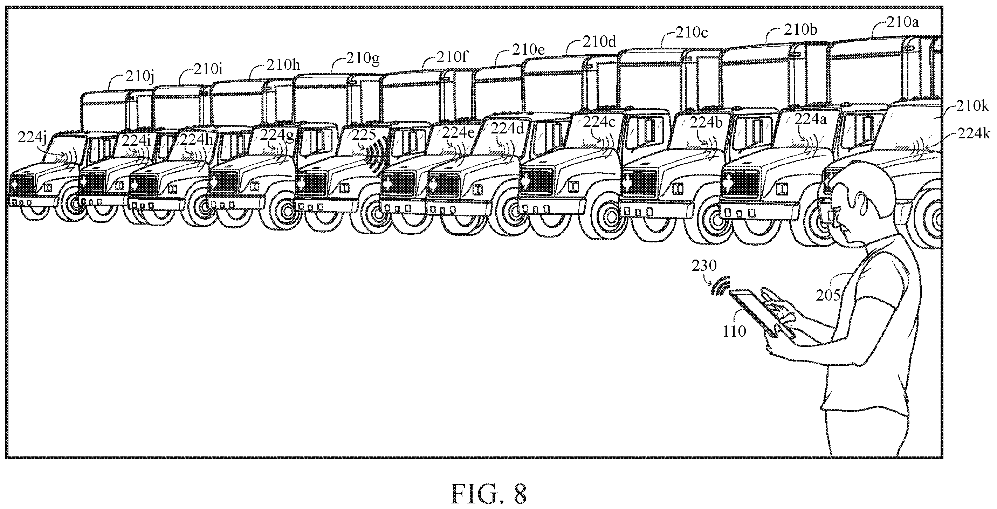

As shown in FIG. 8, each of a multitude of trucks 210a-210k broadcast a wireless signal 224a-k for a truck specific network, with one truck 210f broadcasting a wireless signal 225. However, all of the wireless signal 224a-224k and 225 broadcast in a BLUETOOTH signal in a hidden mode so that a mobile device 110 must already be paired with the CVD 130 of the truck 210 in order to connect to the truck based wireless network 224a-224k or 225 of each of the CVDs 130 of each of the trucks 210a-210k. A driver 205 in possession of a tablet computer 110 pairs with the specific truck wireless network 225 of the CVD 130 of the truck 210f, and thus the driver locates the specific truck 210f he is assigned to in a parking lot full of identical looking trucks 210a-210k.

## Claims

1. A system for vehicle to mobile device secure wireless communications, the system comprising:
a vehicle (210a) comprising an on-board computer (232) with a memory (231) having a vehicle identification number, VIN, (233) a connector plug (235), and a motorized engine (234);
a connected vehicle device, CVD, (130) comprising a processor, a WiFi radio, a BLUETOOTH radio, a memory, and a connector for mating with the connector plug of the vehicle; and
a mobile device (110) comprising a graphical user interface (335), a processor (310), a WiFi radio (307), a BLUETOOTH radio (306), and a cellular network interface (308);
wherein the CVD is configured to broadcast a BLUETOOTH or BLUETOOTH low energy connection in a hidden mode;
wherein the mobile device is configured to search for a vehicle having the CVD broadcasting the BLUETOOTH or BLUETOOTH low energy connection in the hidden mode, the mobile device previously paired to the CVD;
wherein the mobile device is configured to pair with the CVD using a BLUETOOTH certificate pairing in which the certificate has a second field, wherein the mobile device is **configured to include** a MAC address of the CVD in the second field.

2. The system according to claim 1 wherein the mobile device is a tablet computer.

3. The system according to claim 1 further comprising a server for validating the pairing of the mobile device with the CVD.

4. The system according to claim 1 wherein the vehicle is a delivery truck.

5. The system according to claim 1 wherein the CVD uses a BLUETOOTH or BLUETOOTH low energy communication protocol.

6. The system according to claim 1 wherein the CVD obtains a vehicle identification number, VIN, from the on-board computer.

7. A method (600) for finding a specific vehicle in a vehicle depot, the method comprising:
broadcasting (601) a BLUETOOTH or BLUETOOTH low energy wireless connection in a hidden mode from a CVD connected to an on-board computer of a vehicle in the vehicle depot, wherein the wireless connection is only viewable to a previously paired mobile device, wherein the vehicle depot comprises a plurality of vehicles;
searching (602) at a mobile device for a vehicle having a CVD broadcasting the BLUETOOTH or BLUETOOTH low energy wireless connection in a hidden mode, the mobile device previously paired to the CVD; and
pairing (603) the mobile device with the CVD, using a BLUETOOTH certificate pairing in which the certificate has a second field, wherein the mobile device includes a MAC address of the CVD in the second field, which allows a driver to find a specific vehicle.

8. The method according to claim 7 wherein the vehicle comprises the on-board computer with a memory having a vehicle identification number, VEST, a connector plug, and a motorized engine.

9. The method according to claim 7 wherein the CVD comprises a processor, a WiFi radio, a BLUETOOTH radio, a memory, and a connector for mating with the connector plug of the vehicle.

10. The method according to claim 7 wherein the mobile device comprises a graphical user interface, a processor, a WiFi radio, a BLUETOOTH radio, and a cellular network interface.

11. The method according to claim 7 wherein the mobile device is a tablet computer.

12. The method according to claim 7 further comprising a server for validating a pairing of the mobile device with the CVD.

13. The method according to claim 7 wherein the vehicle is a delivery truck.

14. The method according to claim 7 wherein the CVD uses a BLUETOOTH or BLUETOOTH low energy wireless communication protocol.

## Patentansprüche

1. Ein System für sichere drahtlose Kommunikation zwischen Fahrzeug und mobilem Gerät, wobei das System Folgendes aufweist:
ein Fahrzeug (210a) aufweisend einen on-board-Computer (232) mit einem Speicher (231), das eine Fahrzeugidentifikationsnummer, VIN (VIN = vehicle identification number), hat, einen Verbindungsstecker (235) und eine motorisierte Maschine;
ein verbundenes Fahrzeuggerät, CVD (CVD = Connected vehicle device), aufweisend einen Prozessor, ein WiFi Funkgerät, ein BLUETOOTH Funkgerät, einen Speicher, und ein Verbinder zum Kuppeln mit dem Verbindungsstecker des Fahrzeugs; und
ein mobiles Gerät (110) aufweisend eine graphische Nutzerschnittstelle (335), einen Prozessor (310), ein WiFi Funkgerät (307), ein BLUETOOTH Funkgerät (306), und eine zellulare Netzwerkschnittstelle (308);
wobei das CVD eingerichtet ist zum Broadcasten einer BLUETOOTH Verbindung oder einer BLUETOOTH Verbindung mit niedriger Energie in einem versteckten Modus;
wobei das mobile Gerät eingerichtet ist zum Suchen nach einem Fahrzeug mit einem CVD, das die BLUETOOTH Verbindung oder die BLUETOOTH Verbindung mit niedriger Energie in einem versteckten Modus broadcastet, wobei das mobile Gerät zuvor mit dem CVD gekoppelt war;
wobei das mobile Gerät eingerichtet ist, mit dem CVD zu koppeln unter Verwendung einer BLUETOOTH Zertifikat Kopplung in der das Zertifikat ein zweites Feld hat, wobei das mobile Gerät eingerichtet ist, eine MAC-Adresse des CVD in dem zweiten Feld einzufügen.

2. Das System nach Anspruch 1, wobei das mobile Gerät ein Tablet-Computer ist.

3. Das System nach Anspruch 1, ferner aufweisend einen Server zum Validieren der Kopplung des mobilen Geräts mit dem CVD.

4. Das System nach Anspruch 1, wobei das Fahrzeug ein Lieferfahrzeug ist.

5. Das System nach Anspruch 1, wobei das CVD ein BLUETOOTH-Kommunikationsprotokoll oder ein BLUETOOTH-Kommunikationsprotokoll mit niedriger Energie verwendet.

6. Das System nach Anspruch 1, wobei das CVD eine Fahrzeugidentifikationsnummer, VIN, von dem on-board-Computer erhält.

7. Ein Verfahren (600) zum Finden eines spezifischen Fahrzeugs in einem Fahrzeugdepot, wobei das Verfahren Folgendes aufweist:
Broadcasten (601) einer BLUETOOTH drahtlosen Verbindung oder einer BLUETOOTH drahtlosen Verbindung mit niedriger Energie in einem versteckten Modus von einem CVD, das mit einem on-board-Computer eines Fahrzeugs in dem Fahrzeugdepot verbunden ist, wobei die drahtlose Verbindung eine Vielzahl von Fahrzeugen aufweist;
Suchen (602), an einem mobilen Gerät, nach einem Fahrzeug mit einem CVD, das die BLUETOOTH drahtlose Verbindung oder die BLUETOOTH drahtlose Verbindung mit niedriger Energie in einem versteckten Modus broadcastet, wobei das mobile Gerät zuvor mit dem CVD gekoppelt war;
Koppeln (603) des mobilen Geräts mit dem CVD, unter Verwendung einer BLUETOOTH Zertifikat Kopplung in der das Zertifikat ein zweites Feld hat, wobei das mobile Gerät eine MAC-Adresse des CVD in dem zweiten Feld einfügt, was dem Fahrer ermöglicht ein bestimmtes Fahrzeug zu finden.

8. Das Verfahren nach Anspruch 7, wobei das Fahrzeug den on-board-Computer mit einem Speicher aufweist, das eine Fahrzeugidentifikationsnummer, VEST, hat, einen Verbindungsstecker und eine motorisierte Maschine.

9. Das Verfahren nach Anspruch 7, wobei das Fahrzeug einen Prozessor aufweist, ein WiFi Funkgerät, ein BLUETOOTH Funkgerät, einen Speicher, und ein Verbinder zum Kuppeln mit dem Verbindungsstecker des Fahrzeugs.

10. Das Verfahren nach Anspruch 7, wobei das Fahrzeug eine graphische Nutzerschnittstelle aufweist, einen Prozessor, ein WiFi Funkgerät, ein BLUETOOTH Funkgerät, und eine zellulare Netzwerkschnittstelle.

11. Das Verfahren nach Anspruch 7, wobei das mobile Gerät ein Tablet-Computer ist.

12. Das Verfahren nach Anspruch 7, ferner aufweisend einen Server zum Validieren der Kopplung des mobilen Geräts mit dem CVD.

13. Das Verfahren nach Anspruch 7, wobei das Fahrzeug ein Lieferfahrzeug ist.

14. Das Verfahren nach Anspruch 7, wobei das CVD ein BLUETOOTH-Kommunikationsprotokoll oder ein BLUETOOTH-Kommunikationsprotokoll mit niedriger Energie verwendet.

## Revendications

1. Système de communications sans fil sécurisées entre un véhicule et un appareil mobile, le système comprenant :
un véhicule (210a) comprenant un ordinateur de bord (232) muni d'une mémoire (231) contenant un numéro d'identification du véhicule, VIN, (233), une prise de connexion (235), et un moteur motorisé (234) ;
un dispositif de véhicule connecté, CVD, (130) comprenant un processeur, une radio WiFi, une radio BLUETOOTH, une mémoire et un connecteur destiné à s'accoupler à la prise de connexion du véhicule ; et
un dispositif mobile (110) comprenant une interface utilisateur graphique (335), un processeur (310), une radio WiFi (307), une radio BLUETOOTH (306) et une interface de réseau cellulaire (308) ;
dans lequel le CVD est configuré pour diffuser une connexion BLUETOOTH ou BLUETOOTH basse consommation dans un mode caché ;
dans lequel le dispositif mobile est configuré pour rechercher un véhicule ayant le CVD diffusant la connexion BLUETOOTH ou BLUETOOTH basse consommation en mode caché, le dispositif mobile s'étant précédemment apparié au CVD ;
dans lequel le dispositif mobile est configuré pour s'apparier au CVD en utilisant un appariement par certificat BLUETOOTH dans lequel le certificat a un deuxième champ, dans lequel le dispositif mobile est configuré pour comporter une adresse MAC du CVD dans le deuxième champ.

2. Système selon la revendication 1, dans lequel le dispositif mobile est une tablette informatique.

3. Le système selon la revendication 1 comprenant en outre un serveur pour valider l'appariement du dispositif mobile avec le CVD.

4. Système selon la revendication 1, dans lequel le véhicule est un camion de livraison.

5. Système selon la revendication 1, dans lequel le CVD utilise un protocole de communication BLUETOOTH ou BLUETOOTH basse consommation.

6. Système selon la revendication 1, dans lequel le CVD obtient un numéro d'identification de véhicule, VIN, à partir de l'ordinateur de bord.

7. Procédé (600) de recherche d'un véhicule particulier dans un dépôt de véhicules, le procédé comprenant :
la diffusion (601) d'une connexion san fils BLUETOOTH ou BLUETOOTH basse consommation en mode caché depuis un CVD connecté à un ordinateur de bord d'un véhicule dans le dépôt de véhicules, dans lequel la connexion sans fil est visible seulement par un dispositif mobile qui a été précédemment apparié, dans lequel le dépôt de véhicule comprend une pluralité de véhicules ;
la recherche (602), au niveau d'un dispositif mobile d'un véhicule muni d'un CVD diffusant la connexion san fils BLUETOOTH ou BLUETOOTH basse consommation en mode caché, du dispositif mobile ayant été précédemment apparié au CVD ; et
l'appariement (603) du dispositif mobile au CVD, en utilisant un appariement par certificat BLUETOOTH dans lequel le certificat a un deuxième champ, dans lequel le dispositif mobile comporte une adresse MAC du CVD dans le deuxième champ ce qui permet à un conducteur de trouver un véhicule particulier.

8. Procédé selon la revendication 7, dans lequel le véhicule comprend l'ordinateur de bord muni d'une mémoire ayant un numéro d'identification du véhicule, VEST, une prise de connecteur et un moteur motorisé.

9. Procédé selon la revendication 7, dans lequel le CVD comprend un processeur, une radio WiFi, une radio BLUETOOTH, une mémoire et un connecteur destiné à s'accoupler avec la prise de connecteur du véhicule.

10. Procédé selon la revendication 7, dans lequel le dispositif mobile comprend une interface utilisateur graphique, un processeur, une radio WiFi, une radio BLUETOOTH et une interface de réseau cellulaire.

11. Procédé selon la revendication 7, dans lequel le dispositif mobile est une tablette informatique.

12. Procédé selon la revendication 7 comprenant en outre un serveur pour valider un appariement du dispositif mobile avec le CVD.

13. Procédé selon la revendication 7, dans lequel le véhicule est un camion de livraison.

14. Procédé selon la revendication 7, dans lequel le CVD utilise un protocole de communication sans fil BLUETOOTH ou BLUETOOTH basse consommation.
